# EUROPEAN PATENT APPLICATION

(11) **EP 3 144 876 A1**
(43) Date of publication of application: **22.03.2017**
(21) Application number: 15185755.4
(22) Date of filing: 17.09.2015
(51) Int. Cl.: G06Q 50/12, G06Q 30/06, G06Q 20/00, G06F 3/0488, G06Q 30/04

(54) **SYSTEMS AND METHODS FOR INTERACTIVE ORDER AND PAYMENT PROCESSING FOR RESTAURANTS**

(71) Applicant: Mastercard International Incorporated, Purchase NY 10577 (US)
(72) Inventor: NOE, James C, Kent, BR4 0BL (GB); COWEN, Michael J, London, Greater London W2 3DW (GB)
(74) Representative: Gill Jennings & Every LLP

(57) **Abstract**

In interactive processing system, an order for a plurality of items is processed. The system determines items selected by a user for payment from a list of unpaid items of the order through an interactive menu of a first display, which is in communication with a server of the interactive processing system. The system then processes such items for payment and updates the list of unpaid items of the order to remove the processed items. The system makes the updated list of unpaid items available for display on a second display through an interactive menu configured to allow a user of the second display to select, for payment, at least one item from the updated list of unpaid items.

## Description

The present disclosure relates generally to communication and processing methods and associated systems for initiating and processing orders and payments for such orders. In particular, but not exclusively, this disclosure relates to interactive methods and systems for processing an order for a plurality of different items initiated by a group of customers, and more specifically, where at least some members of the group desire to pay for their part of the order separately.

### Background

The traditional dining restaurant experience includes a customer placing an order for a number of items, restaurant staff (such as a waiter/waitress, hostess, chef, and/or the like) servicing the customer in accordance with the placed order, and finally the customer paying for the order upon receiving a respective bill.

A typical customer may use a payment card (such as a credit or debit card) to pay the bill. The staff member may take the card away to a restaurant's Point of Sale (POS) terminal or bring a portable/mobile POS terminal to the table to allow the customer to pay the bill at the table.

When a group of customers dines together, rather often, one of the people in the group pays for the entire order. In particular, restaurants prefer a single person to pay for the entire group order for multiple reasons, including speed, efficiency, and the difficulties associated with processing individually ordered items separately and ensuring that the bill is paid in full when the payment is split between different people in the group.

Technologies, currently employed by the restaurant and hospitality industry, including the POS technology, do not generally provide services that would assist their users in splitting their bills. Rather, these technologies allow restaurants to issue a single bill per order with the ordered items being listed without regard to who ordered food/drinks and/or who actually consumed the ordered food/drinks. Although the payment for the order then can be split into multiple payments, the customers themselves then need to decide and tell the staff member how to split the payment, whilst the staff member needs to ensure that the order is paid in full. Furthermore, additional fees, such as a value added tax (VAT), service charges, and the like, are typically calculated and listed in respect of the total amount, making the calculations concerning how to split the payment even more complicated. Accordingly, where the bill is to be shared, the traditional model for initiating and processing orders and payments for the orders is difficult and time-consuming for the customers and staff alike and is essentially dependent on management and control by the restaurant staff in ensuring the accuracy of the submitted payments.

### Summary

According to a first aspect, there is provided a computer-implemented method of processing, by an interactive processing system, an order for a plurality of items. The method comprises determining, by a server of the interactive processing system, a first group of items selected for payment from a list of unpaid items of the order, the first group of items selected through an interactive menu of a first display of one or more displays, in communication with the server, by a user of the first display. The method further comprises processing the first group of items for payment; updating, by the server, the list of unpaid items of the order to remove the first group of items; and making the updated list of unpaid items available for display on a second display of the one or more displays through an interactive menu configured to allow a user of the second display to select, for payment, at least one item from the updated list of unpaid items.

Therefore, advantageously, multiple customers are enabled to split the payment for a group order on per-item basis with ease and flexibility. Furthermore, the order is processed automatically, accurately, and efficiently. Time required to process group orders, including payment processing, is reduced, whilst the accuracy and convenience of processing the order is increased, thereby improving customer and staff experience and saving the service-provider's resources.

In some embodiments, the method further comprises: determining, by the server, a second group of items selected for payment, from the updated list of unpaid items of the order, the second group selected through the interactive menu of the second display; processing the second group of items for payment; and further updating, by the server, the list of unpaid items of the order to remove the second group of items from the list of unpaid items.

In some example embodiments, the method also comprises making the further updated list of unpaid items available for display on at least one of the one or more displays, through a respective interactive menu.

In this manner, the members of the group who have placed the order are prevented from selecting items for payment that already have been paid for, thereby reducing time required from the members of the group to address the payment for the group order and improving user's experience.

In some example embodiments, the method further comprises associating the first display with a first set of items from the order, the first set of items comprising one or more items ordered in association with the user of the first display, wherein the interactive menu of the first display is configured to identify items in the first set as associated with the user of the first display.

In some example embodiments, the method further comprises associating the second display with a second set of items from the order, the second set of items comprising one or more items ordered in association with the user of the second display, wherein the interactive menu of the second display is configured to identify items in the second set as associated with the user of the second display.

In this manner, each member of the group is able to easily detect items within the order that have been selected by such a member or on behalf of such a member, and thus is able select these items for payment in efficient manner. This is particularly advantageous when the order is large and/or placed by a large group. In accordance with the traditional approach, the items in the order are listed without any regard to who ordered what items. Often, items ordered by one member of the group are listed among items ordered by other members of the group, thereby making it rather difficult for the members of the group to identify their own items. The configurations described herein make such identification easy, saving the customers' time, minimising a possibility of errors, and making the overall experience more efficient and pleasurable.

In some example embodiments, the interactive menu of the first display and/or second display is configured to pre-select for payment all unpaid items from the one or more items of the respective set on the respective display.

In some example embodiments, the interactive menu of the first display and/or second display is configured to pre-select for payment all items remaining on the list of unpaid items on the respective display.

In some example embodiments, the interactive menu of the first display is configured to identify items in the second set as associated with the user of the second display.

In some example embodiments, the interactive menu of the first display is further configured to enable a transfer of selected one or more items from the first set of items into the second set of items, and/or a transfer of selected one or more items from the second set of items into the first set of items.

In this manner, the order/payment process is provided with further flexibility. The members of the group are enabled to select to pay for items ordered by other members of the group, request other members of the group to pay for selected items, and associate selected items with other members of the group, for example, when such item(s) have been ordered on behalf of another member.

In some example embodiments, if the selected one or more items from the first set of items are transferred into the second set of items, the method further comprises updating the interactive payment menu of the first display to deselect the selected one or more items from payment.

In some example embodiments, the interactive menu of the first display and/or of the second display is configured to display a total payment amount for items selected for payment through the interactive menu.

In some example embodiments, the method further comprises: determining selection of an additional item from the list of unpaid items; and recalculating the total payment amount to account for the selection, wherein the interactive menu is further configured to display the recalculated total payment amount.

In some example embodiments, the method further comprises: determining de-selection of a selected item; and recalculating the total payment amount to account for the de-selection, wherein the interactive menu is further configured to display the recalculated total payment amount.

In some example embodiments, the interactive menu is configured to display the total payment amount as comprising a purchase amount for the items selected for payment and a fee amount associated with the purchase amount.

In some example embodiments, the method further comprises: in response to determining selection or de-selection of the purchase amount or the fee amount, recalculating the total payment amount to account for the selection or the de-selection of the purchase amount or the fee amount, wherein the interactive menu is further configured to display the recalculated total payment amount.

Therefore, advantageously, further flexibility for splitting the payment for the order is enabled, without sacrificing the accuracy or efficiency.

In some example embodiments, processing the first group of items for payment comprises transmitting, to a point of sale terminal, the total payment amount for items of the first group.

In some example embodiments, processing the first group of items for payment further comprises: determining an additional payment amount entered through the interactive menu by the user in association with the selected items; and recalculating the total payment amount to include the additional payment amount into the total payment amount before transmitting the total payment amount to the point of sale terminal.

Therefore, member(s) of the group who are paying only for a portion of the order, including not paying for any of the items in the order, are enabled to pay for customary fees, such as tips.

In some example embodiments, the method further comprises completing processing of the order when the list of unpaid items is empty, wherein completing processing of the order comprises: designating, by the server, the order as paid in full and/or disassociating, by the server, the one or more displays from the order to enable association of the one or more display with another order.

In some example embodiments, if an item on the list of unpaid items has been selected through the interactive menu at two or more displays of the one or more displays substantially simultaneously, the method further comprises: once the item is processed for payment in association with a selected display of the two or more displays, de-selecting the item on each remaining of the two or more displays and making the item unavailable for selection at the remaining displays.

In some example embodiments, once a payment is received for an item, the method further comprises designating the item as paid within the interactive processing system and updating the interactive menus of the one or more displays to make the item unavailable for selection on any of the one or more displays.

In some example embodiments, the method further comprises initiating, by the server, the order in association with the one or more displays.

In this manner, items selected at the one or more displays become automatically associated with the order.

In some example embodiments, the method further comprises maintaining the order by the server.

In some example embodiments, maintaining the order comprises: in response to determining that the first set of items has been selected to be ordered, updating the order to include the first set of items into the order, wherein the first set of items has been selected through the interactive menu of the first display from a plurality of items available for order.

In some example embodiments, maintaining the order comprises: in response to determining that the second set of items has been selected to be ordered, updating the order to include the second set items into the order, wherein the second set of items has been selected through the interactive menu of the second display from the plurality of items available for order.

In this manner, multiple members of the group are enabled to contribute their selections to the order, whilst initially placing the order, and modifying the order at a later time. Their selections are accurately tracked and added to the order automatically.

In some example embodiments, the method further comprises transmitting automatically data concerning the order from the server to one or more designated parties to request fulfilment of the order.

In this manner, the orders are processed accurately and in a timely manner regardless availability of the staff to take the order.

In some example embodiments, the data concerning the order is transmitted from the server to the one or more designated parties in response to one or more of: at least one item has been selected for order through the interactive menu of one of the one or more displays, a pre-set time period has expired, or a request to submit the order has been received by the server.

In some example embodiments, the method further comprises detecting selection of an additional group of items through the interactive menu of at least one of the one or more displays after the data concerning the order has been transmitted from the server; updating the order by adding the additional group of items to the order in association with the at least one display; and transmitting data regarding the additional group of items to the one or more designated parties to request further fulfilment of the order.

In some example embodiments, the one or more designated parties are one or more of a kitchen/bar fulfilment system or at least one staff member assigned to the order.

In some example embodiments, the data concerning the order identifies one or more locations of displays used to place the order.

In some example embodiments, the method further comprises in response to detecting selection of an item for order at a display, obtaining data concerning the selected item for display through the interactive menu of the display.

In some example embodiments, the interactive menus of the one or more displays are further configured to indicate status of the order and/or status of individual items in the order.

In some example embodiments, the method further comprises receiving a user enquiry concerning the order, or one or more items in the order, wherein the user enquiry has been submitted through the interactive menu of one of the one or more displays.

In some example embodiments, the method further comprises updating the status of the order and/or the status of individual items in the order in response to the user enquiry.

In some example embodiments, the order is a first order and the method further comprises: initiating a second order in association with a second group of displays in communication with the server; and maintaining by the server the second order.

In some example embodiments, at least some data for the second order are processed by the server in parallel with data for the first order.

Therefore, advantageously, multiple orders may be processed in parallel and/or sequentially.

In some example embodiments, the method further comprises processing the second order for payment.

In some example embodiments, the interactive processing system initiates processing of the second order after completing processing of the first order for payment.

In some example embodiments, initiating the second order comprises associating the second order with at least one display of the one or more displays that was associated with the first order.

According to another aspect, an interactive processing system is provided. The interactive system comprises: a server and a plurality of displays in communication with the server, each of the plurality of displays configured with a respective interactive menu for processing orders and/or payments for the orders, the plurality of displays comprising the one or more displays, wherein the interactive processing system is configured to perform any of the methods described above.

In some example embodiments, the first and second displays are virtual interactive displays running on a single computational device of the interactive processing system, the single computational device having a user interface configured to enable virtual displays, comprising the first display and second display, and to allow switching between the virtual displays, including the first display and the second display, in response to a corresponding request. Therefore, advantageously, a single device can be used by a plurality of members of the same group to place the order, without sacrificing customisation afforded by individual devices. This arrangement further reduces service-provider's costs and conserves resources associated with the implementation and maintenance of the interactive processing system.

In some example embodiments, the plurality of displays comprises one or more of: a built-in interactive display integrated into a table at which the order is served, a stand-alone interactive device having a display, temporarily loaned to a user, one or more virtual displays running on a computational device, or a user mobile having a designated application installed thereon for communicating with the server.

### Brief Description of the Drawings

Implementations will now be described in detail, by way of example only, with reference to the accompanying drawings, in which:
Figure 1 depicts an interactive processing system for initiating and processing orders and/or payments in a restaurant, in accordance with some embodiments;
Figure 2 depicts a smart table in an order-processing mode, in accordance with some embodiments;
Figure 3 depicts a smart table in a payment-processing mode, in accordance with some embodiments;
Figure 4 depicts a flow chart of an interactive order-processing method, in accordance with some embodiments;
Figure 5 depicts a flow chart of an interactive payment-processing method, in accordance with some embodiments; and
Figure 6 depicts a diagram of a mobile device suitable to support an interactive application for order/payment processing, in accordance with some embodiments.

### Detailed Description

Embodiments described herein provide improved methods and systems for the initiation and processing of orders and corresponding payments. In particular, the disclosed methods and systems enable service/goods providers, such as restaurants, to initiate and process group orders efficiently and accurately, with ease and flexibility, thus improving the quality of the provided customer service.

More specifically, the disclosed embodiments improve on known order and/or payment processing methods and systems by introducing and implementing an automated scheme that allows the service providers to maintain data regarding individual items in a group order in association with the members of the group who have ordered such items, and by further providing flexibility with and severability of the payment processing in respect of individual items in the order. The disclosed methods and systems reduce the time required to process group orders and payments for such orders, whilst increasing accuracy and convenience of such processes, thereby improving customer and staff experience and reducing waste of the service/goods providers' resources.

Embodiments are described below primarily with reference to restaurants and other food/drink establishments. However, although this is a particularly preferred application of the disclosed embodiments, the embodiments are in no way restricted to this application. In particular, the context of restaurants and other food/drink establishments, such as bars, pubs, cafes, and the like, is illustrative. The described embodiments and the described techniques are more generally applicable to processing group orders initiated by a plurality of customers (individuals or entities) for a plurality of different items and payment for such orders, where at least some of the customers may want to pay separately for their part of the order. Examples include, but are not limited to, group trips or excursions, bar bills, rent/bills for shared accommodation, shared supermarket bills of multiple people shopping together, air-craft/train at-seat ordering for a group of people travelling together, and other scenarios where, for example, a discount for a larger volume order is provided. Further examples include, but are not limited to, retail stores/outlets, railway/ferry stations, ticketing outlets, such as airline ticketing outlet, utilities, travel, agencies, post office, and other locations for paying bills. Therefore, embodiments according to the invention are not limited by the specific embodiments depicted in the figures and, rather, are limited only by the scope of the claims that follow.

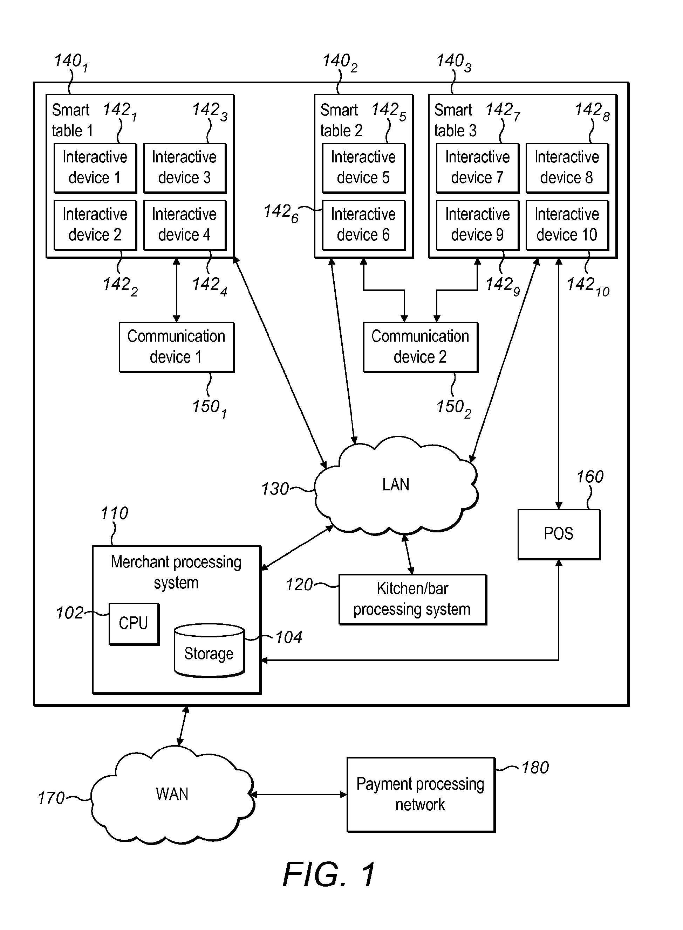

Figure 1 illustrates a simplified diagram of an interactive order/payment processing system 100 for initiating and processing orders and payments in a restaurant, in accordance with some embodiments. In general, the illustrated system 100 enables customers to place their orders directly at their tables, using one or more interactive devices (or displays), informs the restaurant staff members about the incoming orders, indicates to what table/seats the orders should be delivered, and enables payment processing of the orders, including processing of group orders with split payments.

More specifically, the system 100 includes a merchant processing system 110, a kitchen and/or bar processing system(s) 120, a plurality of smart tables 140, and one or more point of sale (POS) terminals 160 for submitting payments using payment cards. The smart tables 140 host a plurality of interactive devices 142 that run interactive menus through which users may place and pay for an order. A POS terminal 160 would typically comprise a card reader, including but not limited to a magnetic card reader, a chip and pin reader, a contactless reader (e.g., an NFC based), and/or the like.

The system 100 further includes one or more communication devices 150 provided to the restaurant staff members to keep track of the incoming orders and/or communicate with the merchant processing system 110 regarding orders, payments, and other matters. A local area network (LAN), wired and/or wireless, is set up to provide for and facilitate communications and data transfer between the above-named and other components of the interactive processing system 100. The system 100 is connected to the Internet through a wide area network 170 and is in communication with a payment processing network 180, such as MasterCard® payment processing network, for processing payments for orders placed in the restaurant, such as payments made at the POS terminal(s) 160.

The merchant processing system (or a server) 110 is configured to provide backend services in respect of initiating and processing orders and respective payments and maintaining corresponding data and rules governing processing and storage of the data. The merchant processing system 110 includes a one or more processors (CPU) 102, local and/or remote data storage 104 (such as a database, a storage medium, or the like) for storing applications implementing functionalities of the merchant processing system 110 and associated data, and additional, non-shown components that may be necessary for implementing the functionalities of the merchant processing system 110, including but not limited to input/output devices (such as a keyboard, monitor, touch screen, and/or the like), communication devices, various controllers, and/or additional memory.

In general, the merchant processing system 110 acts as a communication hub and data collection storage device. It receives data from and transmits data to the interactive device(s) 142, communication device(s) 150, POS terminal(s) 160, and/or the kitchen/bar processing system(s) 120, and processes such data to initiate and process orders placed by the restaurant customers, maintain information about the orders, their status, and/or their recipients, and process payments for such orders, including split payments. A manager, system administrator, or some other designated restaurant employee is able to access the merchant processing system 110 to monitor the occurring events (such as incoming orders and their processing), set-up/adjust rules for processing orders/payments and data maintenance, modify the user interface and interactive menus provided on and supported by the interactive devices 142, run software/hardware updates, and otherwise control and manage the interactive processing system 100.

The kitchen and/or bar processing system 120 includes one or more displays and/or other output devices, such as printers, (not shown) configured to display, or otherwise provide, information regarding the incoming orders to the kitchen/bar staff members. As shown in Figure 1, the kitchen/bar processing system 120 is connected to the LAN 130 via a wireless or wired connection. Once an order is placed by a customer using an interactive menu on the interactive device 142, the order's content is transmitted to the merchant processing system 110, which in turn, provides relevant data (such as what items were ordered and any associated special requests and/or enquiries) to the kitchen/bar processing system 120 to enable preparation of the order. In some other embodiments, the order's content is transmitted to the kitchen/bar processing system 120 directly from the interactive device 142 used to place the order, for example, in parallel with such data being transmitted to the merchant processing system 110.

The kitchen/bar processing system 120 may also include input device(s), such as a keyboard, a touch screen, and/or the like. In some embodiments, the kitchen/bar processing system 120 is configured to allow the kitchen/bar staff members to inform the relevant restaurant staff member(s) that the order or certain items from the order are ready for delivery to the customer and/or update the customer and/or the restaurant staff member(s) about the status of the order. Such information is respectively transmitted to the customer's interactive device 142 and/or the communication device(s) 150 of the relevant restaurant staff members.

Some restaurants may have the kitchen located separately from the bar, or employ more than one kitchen and/or bar located in different parts of the restaurant. The interactive system 100 may include a plurality of kitchen/bar processing systems 120, each corresponding to a separate physical location of the kitchen/bar, or single kitchen/bar processing systems 120 responsible for some or all the locations.

In some embodiments, as the merchant processing system 110 receives incoming orders, it determines/selects a kitchen/bar, and thus a kitchen/bar processing system 120, to be responsible for fulfilling the order, e.g., based on what items are included in the order, proximity of the customer placing the order to the kitchen/bar, and the like, and transmits data relevant to the order to the selected bar/kitchen processing system 120. In some embodiments, the order is transmitted to all kitchen/bar processing systems 120, either directly from the interactive device 142 used to place the order or through the merchant processing system 110, with a request for one of the kitchen/bar processing systems 120 to claim responsibility for the order and inform the merchant processing system 110 accordingly.

As shown in Figure 1, the smart tables 140 are fitted with one or more interactive devices 142. Such interactive devices 142 typically include a display, a processor, and storage (not shown). An interactive order/payment menu application, including information concerning the restaurant's menu and tools to browse the restaurant's menu to select items for order, is maintained in the storage area and, when executed by the processor(s), provides a user interface that includes an interactive menu. Alternatively, the interactive menu application may be fully maintained and supported by the merchant processing system 110, where the interactive devices 142 generally serve as remote displays.

The interactive menu includes items available for order including specials, if any, and/or various options in respect of the available items and payments, including an option to split the payment so as to pay only for selected ordered items. Whilst browsing the interactive menu, the user is able to order items for him/herself and/or other members of the group, make special requests in respect of the ordered items (e.g. 'no onions,' 'no peanuts,' 'a sauce on the side,' and/or the like), view the status of the placed order and specific items in the order (e.g., 'ready for delivery,' 'estimated waiting time is 10 minutes,' and/or the like), and make a full or partial payment for selected item(s) or for the entire order, when the user is ready.

In some embodiments, the display is a touch screen that serves as both an input device and an output device, thus enabling the users to interact with the interactive menu. In some other embodiments, the interactive device includes additional or other input components, such as a mouse and/or keyboard, for example if the display of the interactive device is not capable of accepting inputs, or to help users that prefer a different type of input.

In some embodiments, at least some of the interactive devices 142 are portable devices, such as smart mobile devices, e.g., a tablet, a mobile phone, or the like. In some embodiments, at least some of the interactive devices 142 are built-in (incorporated) into the respective smart table(s) 140. Further, in some embodiments, a customer's own device (such as a smart phone) may function as the interactive device 142. In particular, such a device would have a designated application installed thereon which enables the device to replicate the functionality of the interactive device 142 and communicate with the merchant processing system 110 and/or kitchen/bar processing system 120.

The number of the interactive devices 142 employed at a particular table 140 may differ. For example, each customer may be provided with an individual interactive device, built-in or portable. Alternatively, only one interactive device may be provided at the table. In some embodiments, both types of interactive devices are used, e.g., different types of devices (portable vs. built-in) at different tables, or both types of devices are used at the same table. For example, a particular table may have fewer built-in devices than the number of customers sitting at the table, or a particular customer may have joined the table with a pre-assigned interactive device, e.g., the customer moved to the table from a bar. Further, the customer may have a designated interactive application installed on his or her mobile device that enables the mobile device to function as the interactive device 142 and prefer using his or her own mobile device instead of the interactive device 143 provided by the restaurant.

In some embodiments, the interactive menu application also provides for generation, maintenance, and support of a plurality of virtual interactive displays for and in association with the customers in the group at the table. This functionality is particularly useful when, for example, only one interactive device 142 is used at the table 140. The interactive menu application further enables the customers at the table to switch between their respective interactive displays so as to select and order items that they want and then subsequently to select items for payment using their individual virtual interactive displays.

In some embodiments, the virtual interactive display(s) are generated, created, issued, assigned, or otherwise provided in response to a request by a customer using the interactive menu application. For example, the user interface may include a designated sub-menu or specifically designated button for requesting a virtual display to be generated for a particular customer. The customer may be requested to provide a name or name his or her virtual display in some other manner, or the name (ID) of the display may be automatically generated by the interactive menu application and provided to the customer.

Alternatively, the interactive displays may be generated at the interactive device by a restaurant staff member either directly, or using the merchant processing system 110, e.g., by sending a request to the merchant processing system 110 indicating the number of customers in the group and the table at which the group is seated. The merchant processing system 110 then in turn issues a corresponding command to a respective interactive device. Such a request may be sent by the waiter/waitress assigned to the table, by the hostess, or any other restaurant staff member, for example using the communication device 150, or some other device in communication with the merchant processing system 110, or by directly accessing the merchant processing system 110.

In some embodiments, the communication device 150 includes a user interface with a specially designed functionality that enables generation and transmission of such requests. Alternatively, the restaurant staff member's device may send an email, text message, or other type of notification to a pre-defined email address or phone number, or other identifier associated with the merchant processing system 110. Such a notification include relevant information to enable the merchant processing system 110 to issue respective commands for generating the virtual displays.

The interactive order/payment processing system 100 of Figure 1 is particularly useful in a group order scenario, where a group of customers attends a restaurant together. Once a table or group of tables is allocated to the group, an order is initiated by the merchant processing system 110 in association with the allocated table(s) and each member of the group is assigned an interactive device and/or an interactive display in association with the order. The order is typically initiated by a hostess or another restaurant staff member, for example, by submitting a respective request to the merchant processing system 110, such as via the communication device 150. In some embodiments, the customer or customers may initiate the order by submitting a respective request.

If the restaurant employs portable interactive devices, the hostess or another restaurant staff member may give the members of the group one or more interactive devices at the time of customers' arrival at the restaurant so as to enable the customers to order items whilst waiting for a table to be allocated. In such circumstances, the order may be initiated by the merchant processing system 110 even if no table is yet available. The table is then subsequently assigned to the order, for example, once the customers are seated at the table. In some embodiments, the portable devices (some or all associated with the order) also serve as the 'buzzer' to alert the customer(s) that their table is now free and to direct them to their assigned table.

If the table, although not yet available, is known, the order may be initiated and associated with the interactive devices provided to the customers and the table at the time of the customers' arrival. In such circumstances, a single table may become associated with two different orders at the same time. Such orders are distinguishable, for example, based on timestamps indicating when the orders were initiated.

In some embodiments, information concerning positioning of the customers at the table (in which seat a particular customer seats) may be collected and saved in association with the customers in the group. Such information may be collected and/or determined in various ways, for example, by requesting each customer in the group to enter an identification of his/her seat (e.g., found on the table or seat, shown within the application, told by a waiter, etc.) using a respective interactive device, by requesting the customer to place the interactive device against an RFID reader or tag located at the table/seat where the customer is located, scan a table or seat specific QR code, or by some other tools that enable identification of a specific location at the table, e.g., using GPS positioning. The positioning information of the interactive device (the customer using the interactive device) is associated with the items ordered using that interactive device and is subsequently used to guide the restaurant staff members in locating the respective customer at the table, for example when delivering the ordered items.

If the customers are provided with an interactive device having a plurality of virtual displays running thereon, in some embodiments, the interactive menu application is configured such that each virtual display requests a respective customer to identify his or her location (positioning) at the table, for example by requesting a seat identification number, asking the customer to select his or her location on an image representing the table, and the like. In addition to the location/positioning information, information enabling further personalisation of the customer services may be requested, such as to provide a customer's name, take a photograph, link to / login in a previously created profile, register such a profile on the spot, and/or the like.

Locations of the built-in interactive devices, each corresponding to a specific seat at the table, are already known and, as such, may be maintained by the merchant processing system 110, for example, using identifiers, such as identification numbers, corresponding to these interactive devices, or the like. Thus, when a customer orders one or more items, the merchant processing system 110 associates the identifier (or the like) of the interactive device used to order the one or the more items with the ordered items and maintains them accordingly. Such identification information is used to help the restaurant staff members to identify the customers at the table. In some embodiments, this information is provided to the communication device 150 of the restaurant staff member serving the table 140, who then uses this information to deliver the ordered items to the right customers. Where a particular item has been ordered to be shared by several members of the group, in some embodiments, a plurality of identifiers becomes associated with such an item to indicate to the restaurant staff that the item is to be shared by the respective members of the group.

By browsing the interactive menu displayed by/on the respective interactive device/display, each customer in the group is able to select drink and food items he/she desires to order for him/herself, someone else in the group, or to share and/or submit special requests and/or enquiries in relation to the order. Once the customer selects one or more items from the interactive menu, corresponding data (such what the selected items are, table ID, order ID, customer ID, to whom the ordered item is to be delivered and/or the like) are transmitted from the interactive device 142 to the merchant processing system 110. In some embodiments, a customer sitting at one table may place an order for a customer stilling at another table, in the above-described manner. The merchant processing system 110 associates the received data with the group order currently associated (or most recently associated) with the table 140 hosting the interactive device 142 and records such data in association with the interactive device 142 (and/or the customer). In this manner, the merchant processing system 110 is able to maintain details concerning who ordered what items in the group order associated with the table 140.

This ordering process may be repeated for this and other customers in the group either successively or simultaneously. As each customer adds more items to the order, respective information is provided to the merchant processing system 110, to the communication device 150 of the restaurant staff member assigned to the table, and/or to the kitchen/bar processing system 120, and the interactive menus on the interactive devices 142 are updated to reflect (identify, or the like) items ordered by the customer, the total amount for the items ordered by the customer, items ordered by other customers at the table (in the group), and/or the total order amount. Such updates may be calculated and executed by the interactive device itself, or instead by the merchant processing system 110 based on the received data, and then provided to the interactive device for display in the interactive menu.

The merchant processing system 110 and/or the interactive device 142 also send information concerning the ordered items to the communication device 150 of the restaurant staff member serving the table to update the staff member about the incoming order(s), other restaurant staff members to enable them to provide support to the restaurant staff member responsible for the table, if necessary, and/or to the kitchen/bar processing system 120 to allow the kitchen/bar staff to start fulfilling the order. In some embodiments, where the restaurant employs an automatic food delivery system, e.g., a 'sushi style' conveyer, the order information is used to deliver the ordered items to the persons identified in association with the ordered items.

As the status of the ordered items changes, for examples, as the ordered items are prepared, cooked, ready for delivery to the table, and/or brought to the table, respective responsible parties submit updates to the merchant processing system 110. For example, once a waiter/waitress delivers certain item(s) to a particular table, he/she uses the communication device 150 to update the merchant processing system 110 accordingly (e.g., by selecting a corresponding option next to the items within the order displayed at the communication device 150). As discussed herein, the kitchen/bar restaurant staff can similarly update the status of the ordered items using the kitchen/bar processing system 120. The merchant processing system 110 in turn updates the status of the items in the respective order and sends respective updates and/or commands to cause update of the interactive menus displayed by/on the interactive device(s)/display(s) associated with the order.

Once a customer is ready to pay, he or she uses the interactive payment menu on the interactive display to select items for payment. In particular, by browsing the payment menu, the customer can select to pay for the items he/she ordered, and/or items ordered by someone else in the group, the entire order, or all remaining unpaid items. The customer may also submit a partial payment for a particular item in the order, for example, where several members of the group shared such an item. Further, the customer may choose to pay additional fees, such as a value added tax (VAT), service charges, and the like, in association with the items that he/she is paying for, other items, or with the entire order.

For example, in some embodiments, the customer is initially provided with a list of all items he or she ordered and the respective total amount, including any associated fees, such as services fees. Thus, the system preselects the items ordered by the customer. The customer however can then browse the order to add to the payment list items ordered by others, identify items for which the customer wishes to cover a partial cost, deselect items for which the customer expects other members in the group to pay, or move (transfer) some of the items to a selected member of the group for payment. The customer is also enabled to remove some or all associated fees from the payment list, leaving them for another member of the group to pick-up, or move (transfer) them to a selected member of the group.

As the customer selects/de-selects items, the payment list, total payment amount, and associated fees are updated. When the customer is satisfied with his or her selection, he or she confirms and pays accordingly. Once the customer confirms his or her selection, the order is updated to indicate that the corresponding items are being paid for, and thus, no longer available for selection by the other members of the group. In a scenario where the customer selected a partial payment for a particular item, the item remains available for selection at a reduced respectively cost. In some embodiments, the customers in the group are provided with information concerning who in the group selected which items for payment and associated payment amounts.

In some other embodiments, rather than providing the customer with a list of the items that he/she ordered, a complete order is displayed, where the customer may select/deselect all items or one-by-one.

The customer may select to pay for his or her or other items at any time during the lifetime of the order. For example, if one of the members of the group needs to leave prior to anyone else in the group, he or she can select to pay for the items he/she ordered, associated service and/or other charges, items ordered by other members of the group, including associated charges, or items that will be ordered after that member of the group leaves, including the associated service and/or other charger (e.g., an order of a particular member of the group), whilst the other members of the group can continue ordering additional items. The order will be updated to reflect that the selected items were paid for, including whether the service charge and/or any other fees that were paid.

To pay for the selected items, in some embodiments, the customer may use the interactive payment menu to submit his or her payment information such as payment card information, without involving the restaurant staff. Regular patrons of the restaurant may have an account set up and their information payment prestored, making the payment process quick and easy or a customer may have their payment details stored in a third party 'digital wallet' service (e.g., MasterPass) such that they can be used for payment at multiple merchants of which the restaurant is one. The customer however may select to pay for the selected items using a more traditional approach, such as using a payment card at the POS terminal 160, or cash. Regardless of the selected payment method, the customer indicates the method using the interactive payment menu and a respective message is generated and provided to the corresponding restaurant staff member via the communication device 150. In some embodiments, the restaurant staff member, once at the table, may use its communication device 150 to select which payment is to be processed, which then causes the system 100 to automatically transmit the payment amount to the POS 160.

After all items included in the order have been selected and paid for and the group is ready to leave, the merchant processing system 110 updates the status of the order to reflect it was "paid in full," closes the order, and releases the interactive devices associated with the order for re-assignment to future orders. A new order may be associated with the same table and/or some or all of the same interactive devices. Portable interactive devices may become associated with different table for different orders.

Further, as discussed above, in some embodiments, the order may become associated with a particular table whilst such a table is still associated with a previous order (with a previous group of customers). For example, when the table has been reserved for a particular group of customers, but the table is still occupied, the customers of the group may be given the interactive devices to enable them to browse the menu and start placing the order before getting to the table. In such a scenario, a particular table may be associated with two orders simultaneously.

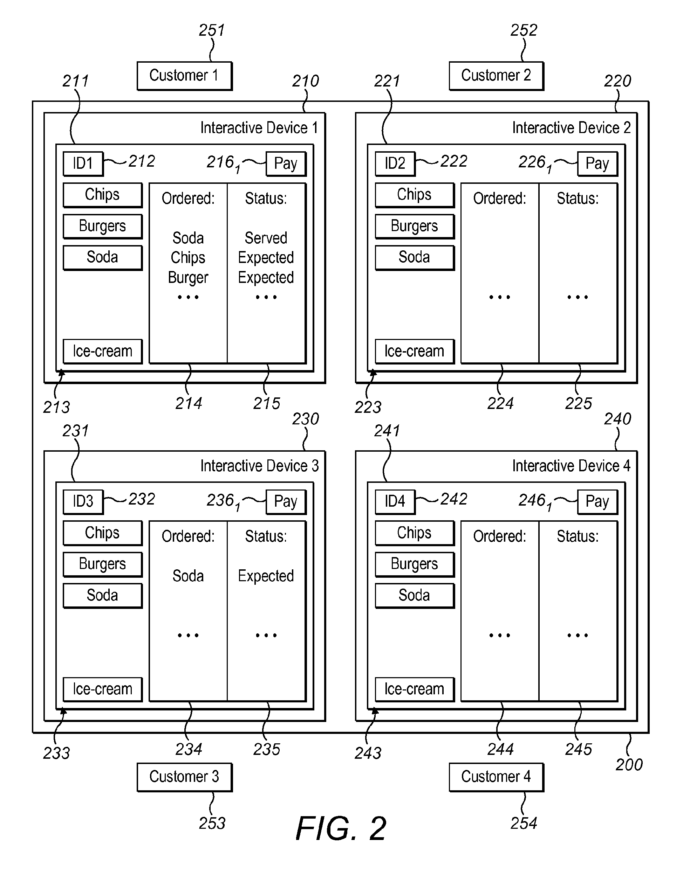

Figure 2 is a simplified diagram of a smart table 200 having four interactive devices 210, 220, 230, and 240 placed thereon and associated with the table 200 for the duration of the lifetime of an order placed by customers 251, 252, 253, and 254 seating at the table smart 200. As described herein, the interactive devices 210, 220, 230, and 240 may be portable (restaurant's or customer's), built-in, or combination of both. Some or all interactive device 210, 220, 230, and 240 may run and support virtual interactive display(s). Each interactive device/display 210, 220, 230, and 240 is respectively assigned to, or otherwise associated with, the customers 251, 252, 253, and 254.

Each interactive device 210, 220, 230, and 240 is an interactive display (such as a tablet), or includes an interactive display for displaying an interactive order/payment menu, such as interactive menus 211, 221, 231, and 241 respectively. As discussed herein, the interactive order/payment menu application enables its users, such as customers 251 to 254, to select items for order and pay for such items and for items ordered by their companions.

In some embodiments, the interactive device 210, 220, 230, and 240 have associated identifiers (IDs) 212, 222, 232, and 242 respectively. These IDs may take a form of a number, name, or the like, and be pre-assigned, assigned at the time the order's initiation, such as by a restaurant staff member or automatically by a backend processing system, be set by a respective customer 251, 252, 253, and 254, or the like. For example, in some embodiments, once an interactive device/display is assigned, given, or otherwise provided to a particular customer and that customer initialises or otherwise accesses the interactive menu application, the interactive menu application requests the customer to enter or otherwise provide his or her name. The provided name is then used by the interactive menu application and a respective backend system, such as the merchant processing system 110 of Figure 1, as the ID of that interactive device.

In some embodiments, IDs 212, 222, 232, and 242 are used for internal processing only and are not generally visible to the users of the interactive menus, whilst in some embodiments, for example, as shown in Figure 2, the ID is displayed on the interactive display within the interactive menu so as to be visible to its user. Such a display may, for example, take a form of a greeting for that particular customer.

In the illustrative scenario of Figure 2, the interactive menu 211, 221, 231, and 241 includes an interactive list (menu, or the like) of items available for order, such as lists 213, 223, 233, and 243, a list (menu, or the like) of items ordered so far, such as lists 214, 224, 234, and 244, and data concerning statuses of the ordered items, such as "served," "expected," "about to be delivered," estimated time to arrival of the ordered item...", and the like, e.g., information designated by reference numbers 215, 225, 235, and 245. The customers 251, 252, 253, and 254 are able to browse through the list of items 213, 223, 233, and 243 and select items they wish to order.

In some embodiments, one or more of the customers 251, 252, 253, and 254 are provided with a list of items previously ordered by such customers, for example, during the last visit of the restaurant, a list of items most frequently ordered by the customer, a list of customer's favourites, such as, for example, defined in the customer's profile. Additionally, the customers may be provided with a list of suggestions based on their respective previous order(s) and/or current order, for example, items that were ordered by other restaurant's guests in addition to the items already and/or previously ordered by the customer, items that complement the items already ordered by the customer, and the like.

In some embodiments, the interactive menu provides its users with additional description of the available items, such as a list of ingredients, nutrition and calorie information, suggested wine/beer/other food pairings, and the like. For example, such information may be displayed in respect of a particular item, as an overlay, when a customer touches such an item using his/her finger.

Further, in some embodiments, the user is able to enter additional requests in respect of the ordered items. For example, a window prompting the user to enter a comment may pop-up, an interactive list of selectable ingredients, using which the user may indicate ingredients to be omitted and/or added may be displayed, and the like. Once the customer selects and confirms a particular item for order, such an item appears on the list of the ordered items, such as the lists 214, 224, 234, and 244, and its respective status is displayed. In some embodiments, the customer 251, 252, 253, or 254 is able to select one or more items, among the items that he or she ordered, and transfer/associate such items to/with another customer at the table 200.

The list 214, 224, 234, or 244, as displayed to the customer, may include only items ordered by the respective customer 251, 252, 253, or 254, or all items ordered at the table 200, where the items ordered by the respective customer 251, 252, 253, or 254 are highlighted or otherwise identified (by default or on demand). Further, in some embodiments, the total for the items ordered by a particular customer and/or for the entire order are displayed to the customer along the list of the ordered items. In some embodiments, which items are in the list of ordered items 214, 224, 234, or 244 is set in accordance with the preference of the user (customer), a restaurant staff member who assigned the interactive device to a particular customer, or the like.

As shown in Figure 2, the interactive menus 211, 221, 231, and 241 are each displayed on its respective interactive device. However, as discussed herein, in some embodiments, a single interactive device may run several virtual interactive displays, where each virtual display provides (displays, runs, supports, or the like) an interactive order/payment menu associated with a particular customer. Such functionality may, for example, be supported by the interactive order/payment menu application running on one of more of the interactive devices 210, 220, 230, or 240.

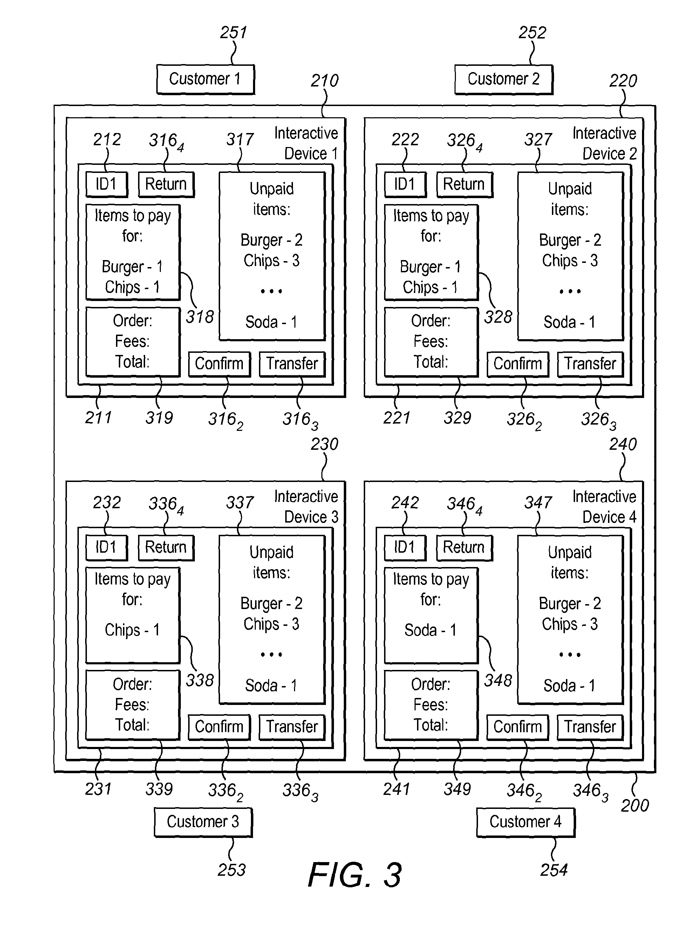

Figure 3 shows another diagram of the smart table 200. The same reference numbers are used to designate items that are also shown in Figure 2.

As discussed with respect of Figure 2, each interactive device 210, 220, 230, and 240 displays an interactive order/payment menu 211, 221, 231, and 241 respectively. Whilst Figure 2 depicts the interactive order/payment menu 211, 221, 231, and 241 in an order processing mode, which enables the respective customers to select and order items from the restaurant menu, Figure 3 depicts the interactive order/payment menu 211, 221, 231, and 241 in a payment processing mode, which enables the customers 251, 252, 253, and 254 to pay for the ordered items.

The interactive order/payment menu is configured, designed, or otherwise enabled to allow its users to switch between the two modes. For example, as shown in Figure 2, the interactive order/payment menu may include a 'pay' button, such as buttons 216₁, 226₁, 236₁, or 246₁, displayed in the order processing mode. In response to a customer selecting the 'pay' button, the interactive menu switches into the payment processing mode. As shown in Figure 3, the interactive order/payment menu may also include a 'return' button, such as buttons 316₄, 326₄, 336₄, or 346₄. In response to the customer selecting the 'return' button, the interactive menu switches back into the order processing mode.

Whilst in the payment processing mode, the customer 251, 252, 253, and 254 is able to access a list of unpaid items, such as lists 317, 327, 337, and 347 respectively. The list 317, 327, 337, and 347 generally includes items that have not yet been selected for payment by this or other members of the group. The list 317, 327, 337, and 347 may initially include only items that have been ordered by the respective customer, all unpaid items from the order placed in association with the smart table 200, or some other pre-determined selection of items from the order placed in association with the smart table 200 by the customers 251, 252, 253, and 254.

The items ordered by the respective customer may be highlighted or otherwise identified to the customer, upon a corresponding request from the customer or by default. What items are included into the list 317 initially depends on a particular implementation, specific preferences of the restaurant using the system, customers' preferences, and/or the like. In some embodiments, the customer is able to request a complete order list or the list that includes only the items that the customer ordered, for example, by selecting a pre-assigned option/button (not shown) of the interactive menu. Such a pre-assigned option may be made available for selection by the customer whilst the interactive menu is in the order processing mode and/or the payment processing mode. Further, in some embodiments, different preferences may be set for different customers in the same group and/or different groups. Thus, respective interactive menus are customisable for the respective customers, regardless of whether they are run on physical or virtual interactive displays.

Once the customer selects one or more items for payment from the list of unpaid items, such items are added to a list of items for which the customer intends to pay, such as lists 318, 328, 338, and 348. Further, a total payment amount is updated and displayed to the customer, e.g., in designated payment amount windows (boxes, or the like) 319, 329, 339, and 349. The total payment amount may be broken down to reflect the cost of the selected items and associated fees.

In some embodiments, the customer is invited to provide feedback on items selected for payment. For example, the customer may be requested to select from several pre-defined options, such as, "really liked the item," "there was a problem with the item," "no comment," and/or the like. The customer's feedback can be requested for each item at the time the customer selects such an item for payment or after the customer finalizes selection of items for payment but prior to allowing the customer to submit the payment. The customer's feedback can instead be requested at other times during the life of the order, or the option to provide feedback in respect of one or more items from the order can be made available to the customers at any time during the life of the order, upon customer's request.

The customer may confirm his or her selection by pressing a 'confirm' button, such as buttons 216₂, 226₂, 236₂, or 246₂, continue with the selection of additional items for payment, remove some of the items for payment from the list, transfer/move some of the selected items to another selected member of the group or leave such items for an identified customer from the group to claim, or transfer the fees associated with the selected items to another selected member of the group or leave such fees for one of customers in the group to claim. In some embodiments, in response to the customer selecting a 'transfer' button, such as buttons 216₃, 226₃, 236₃, or 246₃, a new window is displayed to the customer, where the customer is able to select items and/or fees for transfer and another customer/interactive device at the table 200 to whom the selected items and/or fees will be transferred.

If another customer at the table has transferred some items and/or fees to a particular customer at the table, such items/fees will be included in the list of items for which the customer intends to pay and/or in the payment amount window (box) and identified as such, for example, by indicating the originator of transfer. In some embodiments, the customer is restricted from further transferring such items/fees to the other members of the group. In some other embodiments, the customer is allowed to transfer such items/fees to another member of the group who has not yet submitted a payment in relation to the order. In some embodiments however, the transfer is allowed as long as the order is open, which may result in the same customer submitting more than one payment.

In some embodiments, the customers are also provided with an option to split the bill, instead of going through the process of selecting individual items for payment. The customers are enabled to split the bill between all members of the group or selected members of the group. The customers are enabled to split the bill in a number of ways, such as evenly, allocate a certain portion of the bill to selected members of the group (e.g., percentage or specific number), identify customer(s) responsible for food, drink, food/drink, appetizer(s), main course(s) and/or dessert(s), service and/or other charges, or any combination of the above.

When the customer confirms his/her selection of the items for payment, the interactive menu transitions into a payment stage. In some embodiments, during the payment stage, the interactive menu displays a request to the customer to enter payment details, such as payment credentials. The customer may enter such details and confirm the payment, login to retrieve payment details stored with the restaurant if the customer is a regular patron of the restaurant and has set-up an account with the restaurant, or proceed to a more traditional form of payment, such as using a POS terminal. In some embodiments, the POS terminal is integrated within or attached to the interactive device (or simply installed at the smart table), thus allowing the customer to submit the payment using the POS terminal, without requiring help of a member of the restaurant staff.

If the selected method of payment is to use a payment card at the POS terminal, the backend system transmits a respective message to at least to the member of the restaurant staff responsible for the table 200, for example via the communication device of that restaurant staff member. Further, an update naming the total payment amount and possibly the items selected for payment may accompany the message. In this manner, the restaurant staff member is aware of the expected payment and method of payment. In some embodiments, the restaurant staff member is not required to enter the payment amount into the POS terminal. Instead, the payment amount is automatically transmitted to the POS terminal from the backend system, for example, in response to the restaurant staff member selecting the table 200 and the customer (or interactive device) within an interactive application running on the communication device.

Once the customer confirms the selected items for payment, the list of unpaid items for that and other customers in the group is updated. Therefore, the items that have been selected by the customer are no longer available for selection for payment by other customers. In some embodiments, such selected items are put on hold until the payment process for the customer is successfully completed.

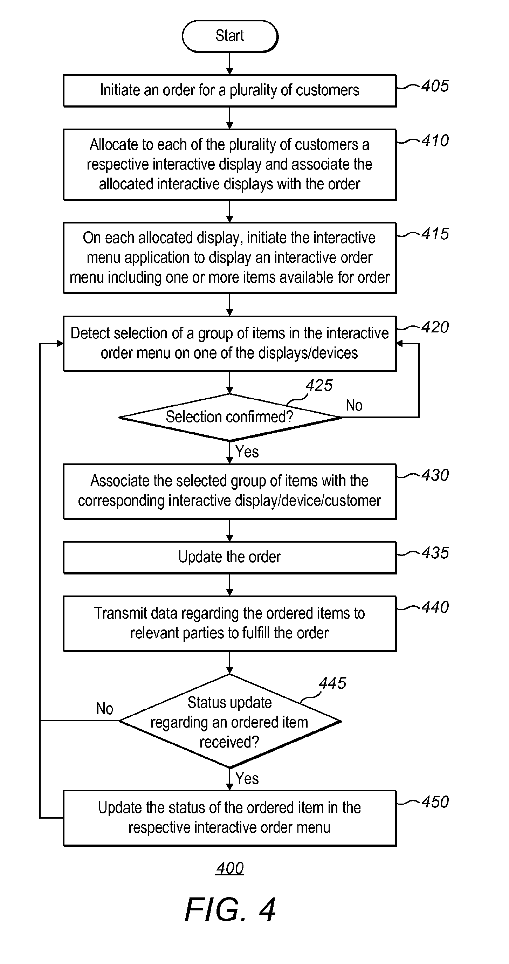

Figure 4 is an example method 400 performed by an interactive order processing system. The method 400 is described in the context of a group of customers dining in a restaurant. However, the method 400 is in not restricted to this application.

The method starts with step 405 at which an order is initiated in association with a plurality of customers dining as a group in a restaurant. The order is initiated by the order processing system (such as a merchant processing system 110 discussed in respect of Figure 1), typically, in response to a request submitted by a restaurant staff member (such as a hostess or a waiter). The request at minimum indicates the number of customers in the group.

At step 410, each customer in the group is allocated a respective interactive display and/or device. The selection of the allocated interactive displays and/or devices may be determined by the order processing system based on a table selected for the group of customers, selected by a restaurant staff member, determined in response to customers' requests (e.g., virtual interactive displays may be initiated in response to a customer submitting a request using a user interface running on an interactive device allocated to the table), and/or the like.

Further at step 410, the allocated displays and/or devices are associated with the order. In this manner, all items ordered using the allocated displays/devices will be included into / associated with the order.

At step 415, an interactive menu application is activated (initiated, launched, or the like) on or in relation to each of the interactive displays allocated to the customers in the group. When the customers in the group each has his/her own interactive device, the activation of the interactive menu application may be performed substantially simultaneously on all of the allocated devices, for example, in response to a respective command send by the order processing system. The interactive menu application may also be activated for a particular interactive display in response to a corresponding request submitted by the user of the interactive display. If some of the customers were allocated virtual displays, the activation of the interactive menu application in relation to each of the virtual displays may be performed at the time a respective customer starts operating his/her virtual display, for example, in response to a corresponding request from the customer.

Typically, only one virtual display may be actively operated by a user at each particular time on a single device, with the other activated virtual displays running in the background. Thus, if a particular device runs/supports multiple virtual displays, the corresponding customers are required to take turns to access their respective virtual devices. Consequently, in a scenario, where several customers in the group share the same device that runs respective virtual displays for such customers, the remaining steps of the method 400, i.e., steps 420 to 450, are performed for each of the virtual displays only when such a display is being operated by the corresponding customer.

Once the interactive menu application has been activated (initiated, launched, or the like), an interactive order menu is displayed on the respective interactive display/device. An example of the interactive order menu is, for example, discussed in respect of Figure 2. The interactive order menu is configured to allow the corresponding customer to browse the interactive menu, including a list of drink/food items available for order, and select one or more items. At step 420, such selection is detected on one of the interactive displays associated with the order, i.e., a group of items selected by a customer in the group is associated with the interactive display. The customer may deselect some of the selected items or select additional items before confirming his or her selection. Once the customer confirms the items selection, for example, by pushing a designated 'confirm' button, moving the selected items in a different designated box, or the like, the order processing system associates the selected group of items with the corresponding display and/or customer (step 430).

At step 435, the order is updated by including (adding) the selected group of items to the order, such as to a list of ordered items maintained by the order processing system in association with the order. The order processing system maintains the selected group of items in association with the interactive display on which the items were selected and/or the customer associated with the interactive display.

At step 440, the order processing system transmits data concerning the ordered items to one or more relevant parties such as parties responsible for fulfilling the order. As discussed in greater detail, for example, in respect of Figure 1, data concerning the ordered items may be transmitted to the kitchen/bar processing system(s) to inform members of the kitchen/bar staff about the incoming order and/or ordered items. Data concerning the ordered items may also be transmitted to communication devices of restaurant staff member(s) assigned to the table and any other restaurant member who may be responsible for serving the ordered items at the table. In some embodiments, data regarding the ordered items is transmitted almost instantaneously, as soon as such items are selected by one of the group members. In this manner, all parties/systems responsible for fulfilment of the order learn about the ordered items substantially instantaneously and the order is processed and fulfilled in efficient and reliable manner.

However, the order processing system also allows a different notification schedule. For example, the order processing system may wait for all customers in the group to place an initial order, such as an order for drinks, an order including at least one item, and/or the like before transmitting data describing the ordered items. Additionally, the order processing system may have a pre-defined time period on the expiration of which data regarding the items ordered by that time is transmitted. Further, the interactive menu may include an option for its users to submit a request to transmit the order (data regarding the ordered items).

As the items from the order are being processed, prepared, delivered, and the like, the relevant parties may submit status updates concerning the status of the ordered items to the order processing system. For example, as discussed in greater detail in respect of Figure 1, a kitchen/bar staff member may update a status of a particular ordered item to "being prepared," "ready to be delivered," and the like using the kitchen/bar processing system. The kitchen/bar processing system then transmits such an update to the order processing system, which in turn either updates the interactive menu(s) displayed on the interactive displays or causes respective updates of such interactive menu(s) to be performed by the interactive menu application (step 450).

Therefore, the interactive order menu is able to display, on an interactive display(s) associated with the order, a status for each item ordered so far as a part of the order, a status for each ordered item associated with the interactive device, a status for selected items in the order, a status for items in the order that have not yet been served to the customer associated with the interactive display or other customers in group, or the like. Each customer may select and set his/her own preferences, using the interactive order menu, as to what status information he/she wishes to have displayed on the interactive display associated with the customer.

In some embodiments, the interactive order menu includes a sorting option enabling its users to sort the ordered items in accordance with their status. Yet in some embodiments, the interactive menu is further configured to enable its users to submit a message to the order processing system, for example, an enquiry concerning a status of a particular ordered item or to request a restaurant staff member to come to the table. Upon receiving such an enquiry, the order processing system forwards the enquiry to a relevant party, as for example, defined by the rules set for the system.

Steps 420 to 450 are repeated for each of the interactive displays/displays. These steps may be performed substantially in parallel, for example, when the customers have been assigned individual interactive devices, or sequentially, for example when the customers were assigned virtual displays instead. These steps may be repeated for the duration of the lifetime of the order. Accordingly, the customers are not required to place their orders at once, and instead are allowed to add items to the order after the initial order has been placed, as the need for additional items arises.

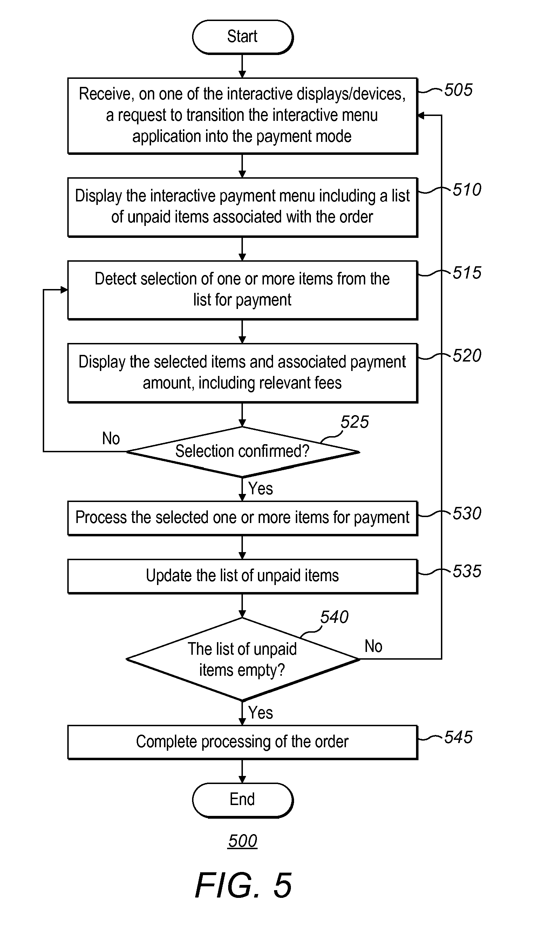

The method 400 may be used in combination with an interactive payment-processing method 500 discussed in respect of Figure 5. More specifically, the method 400 is generally directed to a scenario of the interactive menu application functioning in an order processing mode. The method 500 is however directed to a scenario of the interactive menu application functioning in a payment processing mode. In some embodiments, the interactive menu application is configured to support both modes and allows its users to switch between the modes at will.

The method 500 starts with step 505 at which a request to transition the interactive menu application into the payment processing mode is received at one of interactive displays/devices allocated to a particular group of customers in association with an order placed by such a group of customers. For example, if one of the customers from the plurality of customers described in respect of Figure 4 wishes to pay for some of the ordered items, he or she switches the interactive menu application into the payment processing mode, for example, by pushing a designated button within the interactive menu displayed on the respective interactive display.

Once the interactive menu application is in the payment processing mode, an interactive payment menu, including a list of unpaid items from the order, is displayed to the customer (user) at step 510. An example of such an interactive menu is, for example, discussed in greater detail in respect of Figure 3.

At step 515, selection of one or more unpaid items for payment is detected. As discussed in greater detail in respect of Figures 1 and 3, the selected unpaid items may be the items ordered by the customer and/or by other customers in the group.

At step 520, the items selected for payment are displayed to the customer along with the payment amount, including relevant fees, such as service fees. The customer may amend his or her selection, including transferring some or all fees to another customer in the group associated with the order. Once the customer is satisfied with his/her selection, he/she confirms that he/she wishes to proceed forward with the payment. If such a confirmation is received, the selected items are processed for payment at step 530. This includes accepting and processing a payment for the corresponding amount, and if the payment is successful, designating the selected items as paid.

As discussed herein, the payment can be submitted and processed in a number of ways, including submitting payment through the interactive application, using POS terminal (integrated with the interactive device or a separate POS terminal), using a mobile wallet application, such as a MasterPass installed at the customer's device, by cash, or in some other acceptable manner. If the order was placed using a designated interactive application installed at the customer's device, such an application may be configured to automatically invoke the mobile wallet application once the customer reaches the payment processing stage.

At step 535, the list of unpaid items is updated to remove the processed items. In this manner, such items are no longer available for selection by the members of the group. If the list of unpaid items is not empty, further payments from other members of the group are expected. Therefore, the method 500 returns to step 505 where a request to transition to the payment processing mode is received at another interactive display.

When the group of customers paid for all items in the respective order, the list of unpaid items becomes empty. If no customer in the group wishes to add more items to the order, the payment processing system completes processing of the order at step 545. This step may include assigning the order the status 'paid in full,' closing the order, and releasing the interactive devices/displays associated with the order for re-assignment.

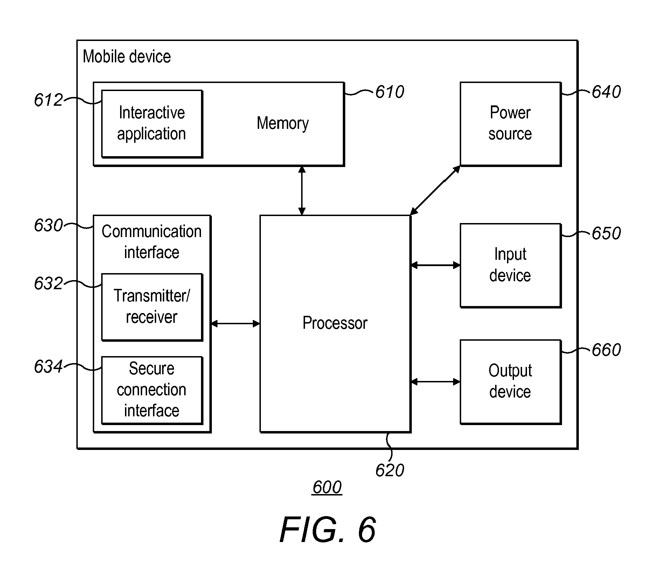

Figure 6 depicts a mobile device 600 suitable to run an interactive application described herein in respect of Figures 1 to 5. The mobile device 600 may be a separate device provided by the service provider, such as a restaurant to its customers, a device integrated into a table, a smart phone used by the customer on everyday basis, or any other mobile communication device capable of hosting a mobile application and enabling data to be exchanged between the mobile application and a designated entity such as the backend server of the service provider. The mobile device 600 may, for example, be a cellular communication device, such as a mobile phone or a smart phone, or a mobile device with a wireless and/or wired access, such as a tablet, a laptop or a personal digital assistant, and/or the like.

The mobile device 600 generally includes one or more processors 620 operatively coupled to memory 610, a communication interface 630, a power source 640, input devices 650 (such as a keyboard, a touch screen, a microphone, and/or the like), and output devices 660 (such as a screen, a speaker, and/or the like). The processor 620 includes circuitry that implements communication and logic functions of the mobile device 600, such as a digital signal processor device, a microprocessor device, various analog to digital and/or digital to analog converters, and/or other support circuits for operating the components of the mobile device 600.

The memory 610 includes any computer readable non-transitory medium or the like configured to store data, code, or other information. For example, the memory 610 may include volatile memory, non-volatile memory, magnetic and optical storage devices such as disk drives, magnetic tape, CDs (compact discs), DVDs (digital versatile discs), or other non-transitory media that are capable of storing code and/or data. The memory 610 can be embedded and/or may be removable. The non-volatile memory may additionally, or alternatively, include an electrically erasable programmable read-only memory, flash memory, and/or the like.

The memory 610 is configured to store any of a number of applications or programs for operating the mobile device 600 and/o the mobile device 600. The application and/or programs generally comprise computer-executable instructions/code, which when executed (operated, or the like) by the processor 620 implement the functions of the mobile device 600 described herein. For example as shown, the memory 610 may include an interactive application 612 for processing orders and/or payments. When executed, the interactive application 612 performs one or more of the functions described above with respect to Figures 1 to 5. The application 612, as well as any other application(s) stored in the memory 610, may provide a graphical user interface (GUI) on a display of the mobile device 600. For example, the GUI for the interactive application 612 enables the user of the mobile device 600 to place an order, submit payment, split the bill, leave feedback, and perform other actions described herein.

The memory 610 may also store data and other information used by the mobile device 600 and its components to implement the functions of the mobile device 600 and/or the other systems described herein. For example, the memory 610 may include user profile information, including user's preferences and favourites, payment information, prior orders, and the like.

In the illustrative embodiments of Figure 6, the processor 620 is further configured to enable the interactive application 612 to communicate with the backend server(s) of the service provider (such as the merchant processing system 110 and kitchen/bar processing system 120 discussed in respect of Figure 1) using the communication interface 630 to perform the functions of the interactive application described herein.

The communication interface 630 of Figure 6 may further includes an antenna (not shown) operatively coupled to a transmitter and receiver 632. The processor 630 is configured to provide signals to and receive signals from the transmitter and receiver 632. These signals include signaling information in accordance with the air interface standard of the applicable cellular system of the wireless telephone network (such as a second-generation (2G) wireless communication protocols IS-136 (time division multiple access (TDMA)), GSM (global system for mobile communication), and/or IS-95 (code division multiple access (CDMA)), or with third-generation (3G) wireless communication protocols, such as Universal Mobile Telecommunications System (UMTS), CDMA2000, wideband CDMA (WCDMA) and/or time division-synchronous CDMA (TD-SCDMA), with fourth-generation (4G) wireless communication protocols, and/or the like) and/or in accordance with non-cellular communication mechanisms, such as via a wireless local area network (WLAN), wired local network (LAN), or other communication/data networks.

As described herein, the mobile device 600 includes a user interface that includes input devices 650 for entering data by the user of the mobile device 600, such as in response to prompts of the interactive application, and/or output devices 660 for outputting data to the user of the mobile device 600, such as prompts and information concerning the ordered items outputted by the mobile application 612. The user input devices 650 include, but are not limited to, any number of devices allowing the mobile device 600 to receive data from the user, such as a keypad, keyboard, touch-screen, touchpad, microphone, mouse, joystick, stylus, other pointer device, button, soft key, and/or other input device(s). The user output devices 660 include, but are not limited to, a mobile display (e.g., a liquid crystal display (LCD), touch screen, or the like) and a speaker 632 or other audio device. Both input and output devices are operatively coupled to the processor 620.

The mobile device 600 further includes a power source 640 for supplying energy needed operate the mobile device. The power source 640 includes, but is not limited to, a battery (e.g., a lithium battery, a nickel-metal hydride battery, or the like) and/or a power adapter that can connect a power supply from a power outlet to the mobile device 600.

The order of execution or performance of the operations and/or steps in the embodiments illustrated and described herein is not essential, unless otherwise specified. Accordingly, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments, unless otherwise specified.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Whilst the invention has been described in terms of various specific embodiments, the skilled person would recognize that the invention can be practiced with modification within the spirit and scope of the claims. Other embodiments will be apparent to those skilled in the art from consideration of the specification and practice of the embodiments disclosed herein. It is intended that the specification and examples be considered as exemplary only, with a true scope and spirit of the invention being indicated by the following claims. In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim.

## Claims

1. A computer-implemented method of processing, by an interactive processing system, an order for a plurality of items, the method comprising:
determining, by a server of the interactive processing system, a first group of items selected for payment from a list of unpaid items of the order, the first group of items selected through an interactive menu of a first display of one or more displays in communication with the server by a user of the first display;
processing the first group of items for payment;
updating, by the server, the list of unpaid items of the order to remove the first group of items; and
making the updated list of unpaid items available for display on a second display of the one or more displays through an interactive menu configured to allow a user of the second display to select, for payment, at least one item from the updated list of unpaid items.

2. The method according to claim 1, further comprising:
determining, by the server, a second group of items selected for payment, from the updated list of unpaid items of the order, the second group selected through the interactive menu of the second display;
processing the second group of items for payment;
further updating, by the server, the list of unpaid items of the order to remove the second group of items from the list of unpaid items; and
preferably making the further updated list of unpaid items available for display on at least one of the one or more displays through a respective interactive menu.

3. The method according to any of the preceding claims, further comprising:
associating the first display with a first set of items from the order, the first set of items comprising one or more items ordered in association with the user of the first display, wherein the interactive menu of the first display is configured to identify items in the first set as associated with the user of the first display; and
associating the second display with a second set of items from the order, the second set of items comprising one or more items ordered in association with the user of the second display, wherein the interactive menu of the second display is configured to identify items in the second set as associated with the user of the second display.

4. The method according to claim 3, wherein the interactive menu of the first display and the interactive menu of the second display each is configured to:
pre-select all unpaid items from the one or more items of the respective set for payment on the first display, or
pre-select all items remaining on the list of unpaid items for payment on the first display.

5. The method according to claim 3 or 4, wherein the interactive menu of the first display is configured to identify items in the second set as associated with the user of the second display and further configured to enable:
a transfer of selected one or more items from the first set of items into the second set of items, and/or
a transfer of selected one or more items from the second set of items into the first set of items.

6. The method according to any of the preceding claims, wherein the interactive menu of the first display and/or of the second display is configured to display a total payment amount for items selected for payment through the interactive menu, and preferably wherein the method further comprises:
determining selection of an additional item from the list of unpaid items or de-selection of a selected item; and
recalculating the total payment amount to account for the selection or the de-selection, wherein the interactive menu is further configured to display the recalculated total payment amount.

7. The method according to claim 6, wherein the interactive menu is configured to display the total payment amount as comprising a purchase amount for the items selected for payment and a fee amount associated with the purchase amount, wherein the method further comprises:
in response to determining selection or de-selection of the purchase amount or the fee amount, recalculating the total payment amount to account for the selection or the de-selection of the purchase amount or the fee amount, wherein the interactive menu is further configured to display the recalculated total payment amount.

8. The method according claim 6 or 7, wherein processing the first group of items for payment comprises transmitting, to a point of sale terminal, the total payment amount for items in the first group, and
preferably wherein processing the first group of items for payment further comprises:
determining an additional payment amount entered through the interactive menu by the user in association with the selected items; and
recalculating the total payment amount to include the additional payment amount into the total payment amount before transmitting the total payment amount to the point of sale terminal.

9. The method according to any of the preceding claims, further comprising:
completing processing of the order when the list of unpaid items is empty, wherein completing processing of the order comprises:
designating, by the server, the order as paid in full, and/or
disassociating, by the server, the one or more displays from the order to enable association of the one or more display with another order.

10. The method according to any of claims 3 to 9, the method further comprising:
initiating, by the server, the order in association with the one or more displays; and
maintaining the order by the server, wherein maintaining the order comprises:
in response to determining that the first set of items has been selected to be ordered, updating the order to include the first set items into the order, wherein the first set of items has been selected through the interactive menu of the first display from a plurality of items available for order; and
in response to determining that the second set of items has been selected to be ordered, updating the order to include the second set of items into the order, wherein the second set of items has been selected through the interactive menu of the second display from the plurality of items available for order.

11. The method according to claim 10, further comprising:
transmitting automatically data concerning the order from the server to one or more designated parties to request fulfilment of the order.

12. The method according to claim 10 or 11, wherein the order is a first order, the method further comprising:
initiating a second order in association with a second group of displays in communication with the server; and
maintaining by the server the second order such that a least some data for the second order are processed by the server in parallel with data for the first order.

13. The interactive processing system comprising:
the server;
a plurality of displays in communication with the server, each of the plurality of displays configured with a respective interactive menu for processing orders and/or payments for the orders, the plurality of displays comprising the one or more displays,
wherein the interactive processing system is configured to perform the method according to any of the preceding claims.

14. The interactive processing system according to claim 13, wherein the first and second displays are virtual interactive displays running on a single computational device of the interactive processing system, the single computational device having a user interface configured to enable the virtual interactive displays, comprising the first display and second display, and to allow switching between the virtual interactive displays, including the first display and the second display, in response to a corresponding request.

15. The interactive processing system of claim 13 or 14, wherein the plurality of displays comprises one or more of: a built-in interactive display integrated into a table at which the order is served, a stand-alone interactive device having a display, temporarily loaned to a user, one or more virtual displays running on a computational device, or a user mobile having a designated application installed thereon for communicating with the server.
